# EUROPEAN PATENT APPLICATION

(11) **EP 3 113 024 A1**
(43) Date of publication of application: **04.01.2017**
(21) Application number: 16176900.5
(22) Date of filing: 29.06.2016
(51) Int. Cl.: G06F 11/30, H04L 12/26, G06F 11/34

(54) **NETWORK ELEMENT MONITORING**

(30) Priority: 30.06.2015 US 201514754818
(71) Applicant: Tieto Oyj, 00441 Helsinki (FI)
(72) Inventor: Kallio, Marko, 41340 Laukaa (FI); Lappalainen, Kari, 40520 Jyväskylä (FI)
(74) Representative: Papula Oy

(57) **Abstract**

Improved methods and arrangements for making measurements for load balancing and network management are disclosed for software defined networking components. In a software defined network component a monitoring module is provided in the kernel side of the component. The monitoring module may be used for making measurements in the kernel side or transmitting measurement packets directly to peer entities in other software defined network components.

## Description

### BACKGROUND

Software defined networking is an approach where the network control plane is physically separated from the forwarding plane, and where the control plane controls several devices. In a typical implementation some of the network elements are implemented as software defined switches that are typically connected to a controller or form chains with other software or hardware implemented elements. The purpose of this is allowing network engineers and administrators to respond quickly to changing requirements. A software defined switch may be associated with a traditional hardware network element.

Each of the software defined switches may implement different services that can be chosen by the user. Examples of such functionality include, for example, firewall, content filtering, and alike. Each of the services may be implemented by hardware or software defined network element and be associated with more than one switch.. When a network element implementing the requested service is running out of capacity new task may be forwarded to other network element that still has available capacity. The services as such may be implemented in the software defined switch or in a separate instance, such as a server or other computing device, which is coupled with the switch.

The above mentioned procedure of load balancing is well known to a person skilled in the art. Load balancing is based on measurements of current load of the service implementing node, for example a hardware device or software defined switch. The load can be measured, for example, from CPU usage levels or service latency by using conventional methods. Latency can be measured, for example, by sending a measurement packet from a device, such as a controller configured to perform load balancing, to each of the switches. The measurement packet is then returned to the sender so that the latency can be determined from the round trip time. In case of synchronized clocks it is possible to measure one-way latency which is preferable particularly in cases where the directions have difference in propagation time, for example, because of asynchronous network components.

As the load balancing as a process is depending on quality measurements there is always a need for finding improved measurement and control methods that would allow faster and more precise reaction to an overload situation.

### SUMMARY

Improved methods and arrangements for making measurements for load balancing and network management are disclosed for software defined networking components. In a software defined network component a monitoring module is provided in the same side of the memory space of the component as the corresponding network functionality. The monitoring module may be used for making measurements in the apparatus or transmitting measurement packets directly to peer entities in other software defined network components.

A method for monitoring status in a software defined network element is suggested. The software defined network element comprises at least one memory divided into a user space and a kernel space. In the method monitoring module is executed in the same space with the network functionality and it is measuring status of said software defined network element. The method may be implemented by an apparatus, such as a software defined network element, so that the network element executes a computer program by a processor under the space of the memory where the monitored entities are executed.. Thus, the apparatus comprises at least one processor for executing computer programs and at least one memory that is divided between a user space and kernel space.

A benefit of the arrangement mentioned above is that it has a direct access to memory locations in the memory space where the monitored entities are executed. Thus, it is possible to monitor buffer levels wherein the buffers are located in the user space or the kernel space by choosing the space where the monitoring module is executed. A further benefit of the arrangement mentioned above is that it is possible to acquire precise information from other network elements as the measurement packets and messages are generated and sent near network interface of the network element and is not polluted by delays introduced by the link between network elements and controller, IP stack or other possible instances in the packet path.

A further benefit of the near network interface face operation is that there is no need to compute compensation of the other elements for measurement results because they do not contain unnecessary information that should be compensated. The compensation calculation is always an estimate and it is desirable to use more accurate information when available. The benefits mentioned above provide faster and more precise reaction to the overload situation. Furthermore, in some cases the imminent overload situation can be prevented because of fast and precise detection so that the required reaction is executed early enough. A further benefit of an embodiment where the monitoring module is executed in the kernel space is the execution order. As the execution order is determined by the kernel it is typical that processes running in the user space have some variation in execution cycles which may cause undesired variation to the measurement results. This undesired variation can be avoided when the monitoring module is executed in the kernel space.

### BRIEF DESCRIPTION OF THE DRAWINGS

The accompanying drawings, which are included to provide a further understanding of the invention and constitute a part of this specification, illustrate embodiments of the invention and together with the description help to explain the principles of the invention. In the drawings:
**Fig. 1** is a block diagram of an example embodiment,
**Fig. 2** is a block diagram of an another example embodiment,
**Fig. 3** is a flow chart of a method according to an example embodiment, and
**Fig. 4** is a flow chart of a method according to another example embodiment.

### DETAILED DESCRIPTION OF THE INVENTION

Reference will now be made in detail to the embodiments of the present invention, examples of which are illustrated in the accompanying drawings.

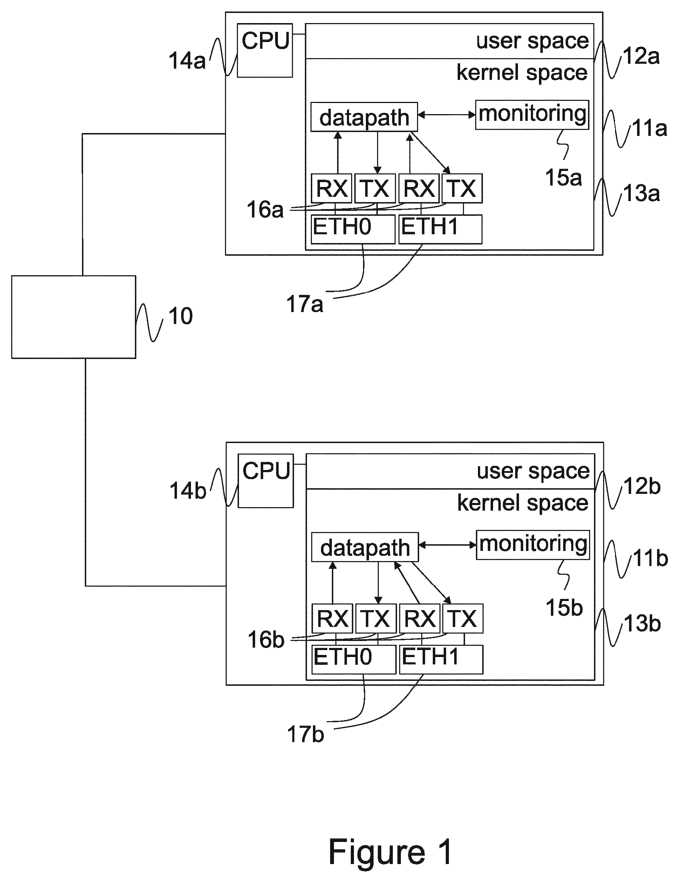

In figure 1 a block diagram of an embodiment involving a controller 10 and two software defined switches 11a and 11b comprising a memory is disclosed. Switches are connected to the controller 10. The expression controller in this should be interpreted to be an SDN controller, which is a controller controlling software defined switches or other software defined network elements. In the figure switches 11a and 11b are illustrated so that the user space 12a, 12b of a memory and the kernel space 13a, 13b of the memory 13a, 13b. The switches 11a, 11b may comprise also other memories. The switches further comprise a processor 14a, 14b, which is connected to the memory and executes code under the memory spaces mentioned above. In the illustrated examples the code is executed in the kernel space. Thus, the monitored entities are also located in the kernel space.

The user space of the memory 12a, 12b is a set of locations where normal user processes run. In practice, the user space 12a, 12b comprises everything except the kernel. The role of the kernel is, for example, to manage the applications running in the user space. The kernel space 13a, 13b is the location where the kernel code is stored and executed under. The access to memory locations depends on the space where the code is executed under. The code executed under the user space 12a, 12b has an access to memory on the user space side and the code executed under the kernel space 13a, 13b has an access to memory locations on the kernel side. Thus, the code executed under kernel space 13a, 13b can read and write all memory locations in the kernel space. This applies to code that is included in the kernel and may include, for example, different device drivers, such as network device drivers, however, it is possible to include all kinds of necessary services in the kernel. This is, however, typically desired only for services and drivers that need or at least benefit from the access provided by the kernel space 13a, 13b.

In the kernel space 13a, 13b a monitoring module is provided. In the embodiment of Fig. 1 The monitoring module 15a, 15b is configured to monitor the buffer levels at the plurality of buffers 16a, 16b that are coupled with at least one network interface 17a, 17b. As the monitoring module 15a, 15b is implemented under the kernel space 13a, 13b it is able to monitor the buffer levels and able to determine if there is an overload situation in the switch 11a, 11b. When compared with the conventional measurement methods the buffer level measurement is able to provide information about possible overload situation already before the overload situation occurs if a change in buffer levels has been detected. The buffer level measurement provides accurate information from the measured component and is not disturbed by the other devices, components or code outside the kernel space 13a, 13b or the switch 11a, 11b.

Even if in the description above the buffers 16a, 16b are located in the kernel space 13a, 13b, it is not necessary. The monitored buffers may be located also in a driver, module or other code executed under user space 12a, 12b, however, in that case also the monitoring module 15a, 15b is executed in the user space..

The measurement results gathered by the monitoring module 15a, 15b are sent to a controller or other device comprising load balancing. The measurement results may be used in performing load balancing functionality based on the actual load of the software defined switch so that the other components of the overall system do not disturb the measurements.

In the embodiment of figure 1 two network interfaces 17a, 17b are shown for each switch, however, the number of network interfaces 17a, 17b may be chosen according to the need of the switch. Thus, a switch requiring lot of network capacity may comprise higher number of network interfaces. Correspondingly, even if only one processor 14a, 14b is shown, a switch implementing a processor intensive service may comprise a plurality of processors.

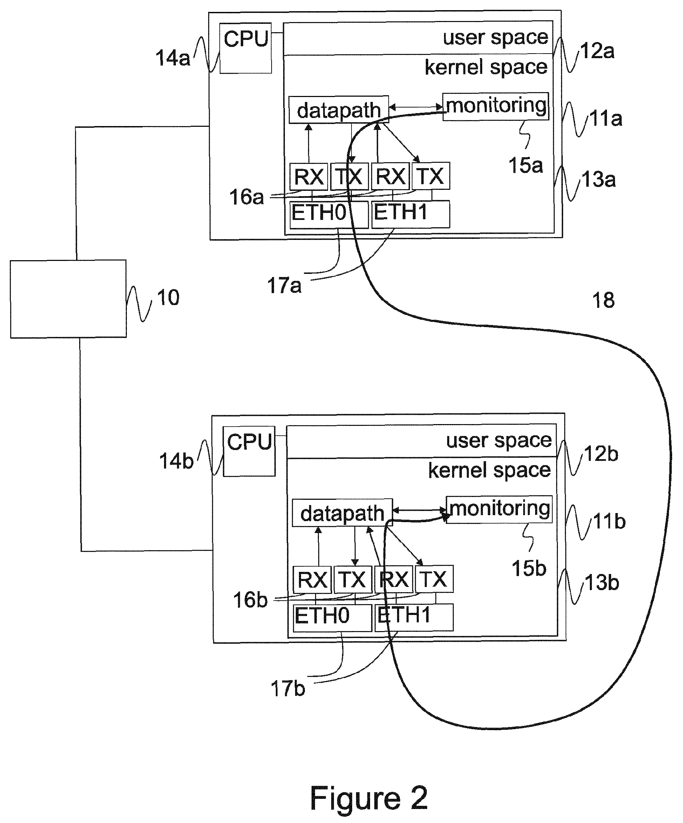

In figure 2 an embodiment is disclosed. The embodiment corresponds with the embodiment of figure 1, however, instead of, or in addition to, buffer level monitoring latency between two different software defined switches is disclosed. In figure 2 monitoring module 15a of the first software defined switch 11a is configured to send a measurement packet to the second software defined switch 11b as shown by arrow 18 in the figure. The measurement packet is sent directly from the datapath through a network interface 17a so that it does not pass through controller 10. The second software defined switch 11b responds to the measurement packet so that the monitoring module 15a can determine the round trip time or the switches 11a and 11b do have a synchronized clock it is possible to provide one way time as a response and the clock synchronization is precise, preferably exactly the same time. The response may be sent by the monitoring module 15b, however, it is possible that there is other components that are configured to respond to measurement packets of different type or the response may be expected from a service that is tried to be reached. In some embodiments it is possible to determine the responding module. Thus, the response received at the monitoring module 15a includes information that has been retrieved in accordance with the request.

In the arrangement described above it is possible to retrieve information regarding load and the capacity of a network element so that the controller 10 is not disturbed and also the measurement results give a true status of the measured element because the possible delays caused by controller 10 are absent from the measurements.

The methods discussed above may be used together with conventional methods as they complement each other. Even if it is beneficial to gain information without additional disturbance it is important to know all possible reasons for overload situation so that the problem can be addressed appropriately.

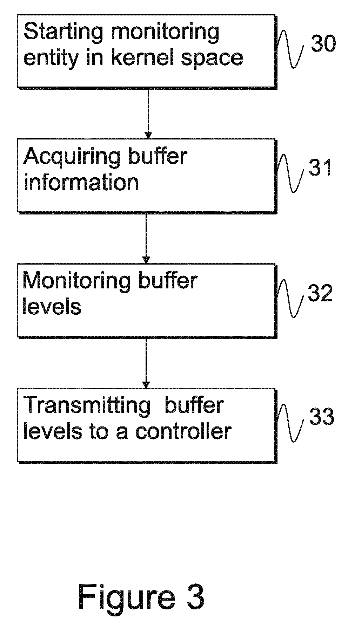

In figure 3 a method is disclosed. The method is a method used in an arrangement similar to the arrangement of figure 1. The method of figure 3 is implemented in a software defined network element, such as a software defined switch. Typically the method is implemented in a form of a computer program that is executed in a network element so that the computer program defines the functionality.

As explained above the network element comprises a memory that is divided between a user space and a kernel space. This division is very common in operating systems. Thus, the network element may include a common operating system, such as Linux. Firstly, computer code for implementing a monitoring module is executed in the network element, step 30. The monitoring module is executed under the kernel space. Then the monitoring module needs achieve access to the monitored resources, step 31. As the monitoring module is implemented in the kernel space it has access rights to read all memory locations in the kernel space. Thus, it is enough to acquire access information, for example, in form of memory address from which the status of a buffer may be read. This information can be acquired, for example, by internal signaling, from user definitions or read from a configuration file. As the memory allocation is typically dynamic it is common to use names or other identifiers so that the actual memory address is achieved.

When the monitoring module is up and running it will monitor the buffer levels in accordance in a predetermined manner, step 32. For example, the monitoring may be done based on a time interval, launched events, upon a request or based on any other need. Lastly, the gathered information is sent to a controller, which may pass it to a master controller, step 33. The monitoring may further include rules regarding how and when the information is sent further. For example, the information may be sent when certain buffer occupancy has been reached or when a fast change in buffer occupancy has been detected. There may be one or more limits associated with the transmission with possibly different content.

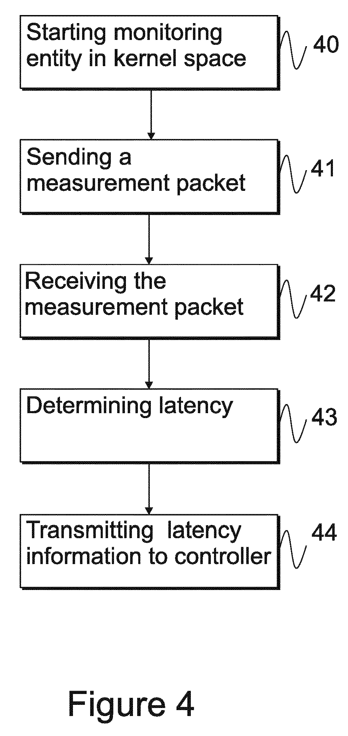

In figure 4 another method is disclosed. Again a monitoring module is started in the kernel space, step 40. Instead of monitoring buffer levels the monitoring module is used for measuring latency as shown in figure 2. The monitoring module sends a measurement packet directly to at least one other network element that may be similar to the sending element, step 41. The latency measurement packet is then received at least one other network element and returned, step 42, directly back for computing the latency, step 43. Thus, the measurement packet never passes the controller controlling the network elements. Lastly the information is sent to the controller controlling the network element, step 44.

The above described arrangements and methods are implemented in a software defined network element, such as a software defined switch. The information gathered by the network element may be used in a plurality of different configurations. The information may be used for load balancing between two network elements that are located in a same network or a cloud, however, by connecting network element controllers to a master controller the information may be distributed in a plurality of networks or clouds.

Even if above two examples have been disclosed in detail the arrangement may be used to monitor other resources, such as central processor load and temperature, memory allocation, other network traffic and any other information that could be used in load balancing or other system maintenance tasks.

As stated above, the components of the exemplary embodiments can include computer readable medium or memories for holding instructions programmed according to the teachings of the present inventions and for holding data structures, tables, records, and/or other data described herein. Computer readable medium can include any suitable medium that participates in providing instructions to a processor for execution. Common forms of computer-readable media can include, for example, a floppy disk, a flexible disk, hard disk, magnetic tape, any other suitable magnetic medium, a CD-ROM, CD±R, CD±RW, DVD, DVD-RAM, DVD±RW, DVD±R, HD DVD, HD DVD-R, HD DVD-RW, HD DVD-RAM, Bluray Disc, any other suitable optical medium, a RAM, a PROM, an EPROM, a FLASH-EPROM, any other suitable memory chip or cartridge, or any other suitable medium from which a computer can read.

It is obvious to a person skilled in the art that with the advancement of technology, the basic idea of the invention may be implemented in various ways. The invention and its embodiments are thus not limited to the examples described above; instead they may vary within the scope of the claims.

## Claims

1. A method for monitoring status in a software defined network element, wherein said software defined network element comprises at least one memory divided into a user space and a kernel space, comprising:
executing a network service in a memory space, wherein said memory space is a user space or a kernel space,
executing a monitoring module in said memory space; and
measuring, by said monitoring module, status of a software defined network element.

2. The method according to claim 1, the method further comprising: monitoring, by said monitoring module, at least one buffer in said software defined network element.

3. The method according to claim 2, wherein said at least one buffer is a network interface buffer.

4. The method according to any of preceding claims 1 - 3, wherein said memory space is a kernel space.

5. The method according to any of preceding claims 1 - 4, the method further comprising: sending, by said monitoring module, a measurement packet directly from the datapath of said software defined network element to a second software defined network element.

6. The method according to claim 5, the method further comprising:
transmitting said measurement results to a controller.

7. A computer program comprising code configured, when executed on a data-processing system, to perform a method according to any of preceding claims 1 - 6.:

8. An apparatus comprising:
a network interface;
at least one memory, wherein said memory is divided into a user space and a kernel space;
a processor for executing computer programs stored in said memory; wherein
said processor is configured to execute a network service in a memory space, wherein said memory space is a user space or a kernel space;
said processor is configured to execute a monitoring module in said memory space; and
said monitoring module, when executed by said processor, is configured to monitor the status of a network element.

9. The apparatus according to claim 8, wherein said apparatus is a software defined network element.

10. The apparatus according to claim 8 or 9, the monitoring module further being configured to monitor at least one buffer in said apparatus.

11. The apparatus according to claim 10, wherein said at least one buffer is a network interface buffer.

12. The apparatus according to claim 11, wherein said at least one of said at least one buffer is located in said user space.

13. The apparatus according to any of preceding claims 8 - 12, wherein the apparatus comprises a datapath and the monitoring module is further configured to send a measurement packet directly from the datapath of network element to a second software defined network element.

14. The apparatus according to any of preceding claims 8 - 13, wherein said monitoring module is configured to perform said monitoring by making measurements.

15. The apparatus according to claim 14, wherein the monitoring module is further configured to transmitting said measurement results to a controller.
